Europäisches Patentamt

European Patent Office

Office européen des brevets

(11) Numéro de publication : **0 446 147 A2**

# (12) DEMANDE DE BREVET EUROPEEN

(21) Numéro de dépôt : **91420028.2**

(51) Int. Cl.⁵ : **A23L 3/42, A23L 3/3562,** A23B 7/022, A23B 7/08

(22) Date de dépôt : **29.01.91**

(30) Priorité : **13.02.90 FR 9001936**

(43) Date de publication de la demande :
**11.09.91 Bulletin 91/37**

(84) Etats contractants désignés :
**BE CH DE ES FR GB IT LI**

(71) Demandeur : **GATTEFOSSE S.A.**
**36 chemin de Genas**
**F-69800 Saint Priest (FR)**

(72) Inventeur : **Bousser, Robert**
**13 rue Bassano**
**F-75016 Paris (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

(54) **Procédé pour stabiliser et sécher les produits d'origine biologique par mélange avec un système dépresseur à base de sel et de sucre.**

(57)     Procédé pour stabiliser et sécher les produits biologiques, par mélange avec un système dépresseur à base de sel et de sucre, caractérisé en ce qu'il consiste :
— à traiter des produits biologiques frais ;
— à mélanger à ces produits, de l'ordre de trois fois la quantité d'eau contenue dans ces produits, un système dépresseur comprenant un mélange de dextrose et de chlorure de sodium, dans lequel la proportion pondérale entre le dextrose et le sel, est comprise entre sept et sept et demie (7 et 7,5) ;
— puis, à soumettre ce mélange, à température ambiante, à une action de broyage rapide, de manière à obtenir des granulés humides ;
— et enfin, à sécher le produit obtenu sous légère ventilation à une température comprise entre 25 et 30°C.
Application : stabilisation et séchage de plantes condimentaires et aromatiques.

EP 0 446 147 A2

Jouve, 18, rue Saint-Denis, 75001 PARIS

# PROCEDE POUR STABILISER ET SECHER LES PRODUITS D'ORIGINE BIOLOGIQUE PAR MELANGE AVEC UN SYSTEME DEPRESSEUR A BASE DE SEL ET DE SUCRE

L'invention concerne un procédé pour stabiliser et sécher les produits d'origine biologique, végétale ou animale, notamment des plantes condimentaires ou aromatiques, particulièrement pour leur conservation de longue durée ; elle se rapporte également aux produits traités de la sorte.

Si dans la suite de la description, le plus généralement, l'invention est décrite dans son application aux produits végétaux, tels que par exemple les plantes, les fruits, les légumes, les épices, mais surtout les produits condimentaires ou les plantes aromatiques, elle peut être également utilisée avec des produits biologiques d'origine animale.

Comme on le sait, pour stabiliser, c'est-à-dire conserver les propriétés actives des plantes, on les sèche le plus souvent à l'air. Bien que largement répandue, cette technique présente de nombreux inconvénients liés essentiellement à la lenteur de l'opération qui entraîne des dégradations, des décolorations, et des désodorisations. Pour accélérer le phénomène de séchage, on peut effectuer un apport de calories supplémentaires. Cela malheureusement affecte généralement et irréversiblement les principes actifs fragiles, qui sont souvent le plus recherchés. Les techniques de lyophilisation ou d'atomisation qui donnent d'excellents résultats, restent encore trop coûteuses et peu intéressantes pour les plantes aromatiques ou les produits condimentaires, car on n'évite pas le défaut de désodorisation.

Bref, en l'état de la technique, les plantes séchées ne présentent pas les mêmes qualités et propriétés que les plantes fraiches.

Depuis longtemps, on sait stabiliser un produit biologique en le traitant par un agent conservateur dépresseur, c'est-à-dire par un composé qui inactive l'eau contenue dans ces produits.

On a ainsi proposé de faire appel à du sel (chlorure de sodium). Si le sel à faible dose améliore la sapidité des produits, et même parfois exhauste les goûts, en revanche, au-delà d'une concentration dans l'eau des produits à conserver que l'on situe généralement aux environs de 5 %, le produit prend alors un goût trop salé, rapidement inacceptable et même insupportable, sauf à le dessaler ultérieurement avant de le consommer. Bref, la conservation de produits biologiques au moyen de sel pose des problèmes pour des concentrations supérieures à 5 %.

On a également proposé d'utiliser comme agent dépresseur des sucres. Cette technique est largement utilisée pour la conservation des fruits, notamment sous forme de confitures ou de fruits confits. Dans ce cas, la concentration de sucre se situe aux environs de 65 à 70 %.

De même, on a également proposé depuis longtemps, notamment en cuisine ou en patisserie, d'associer les deux saveurs : salée et sucrée. En pratique, cette association nécessite de faibles quantités de sel et de sucre qui exhauste le goût des produits traités. Si l'on veut augmenter ces concentrations, on obtient une saveur mixte plus ou moins salée ou sucrée, suivant les proportions relatives : sel et sucre.

L'invention vise un procédé pour réaliser la stabilisation et le séchage, donc la conservation de longue durée des produits d'origine biologique, au moyen d'un système dépresseur à base de sel et de sucre, en proportions telles que l'on puisse conserver longtemps à ces produits toutes leurs propriétés initiales, tant sur le plan des principes actifs (alcaloïdes, oligo-éléments, vitamines, huiles essentielles, polyphénols, etc..), que sur celui des couleurs (chlorophylle, anthocyanes, etc..), mais aussi sur celui des goûts, et ce sans leur communiquer une saveur particulièrement sucrée ou salée, mais plutôt une saveur mixte, dans lesquelles ces deux saveurs se neutralisent sensiblement.

Ce procédé pour stabiliser les produits biologiques par mélange avec un système dépresseur à base de sel et de sucres, se caractérise en ce qu'il consiste :

– tout d'abord, à traiter des produits biologiques frais ;

– ensuite, à mélanger à ces produits, de l'ordre de trois fois la quantité d'eau contenue dans ces produits biologiques frais, un système dépresseur comprenant un mélange de dextrose et de chlorure de sodium, dans lequel la proportion en poids entre le dextrose et le sel est comprise entre sept et sept et demi (7 et 7,5) ;

– puis, à soumettre ce mélange, à température ambiante, à une action de broyage rapide, de manière à obtenir des granulés humides ;

– et enfin, à sécher le produit obtenu sous une légère ventilation, à une température comprise entre 25 et 35°C.

En d'autres termes, l'invention consiste à combiner quatre phases spécifiques, à savoir respectivement :

. l'utilisation de produits biologiques frais ;

. l'utilisation d'un mélange spécifique de dextrose et de sel en proportion pondérale précise de sept à sept et demie (7 à 7,5), introduit également en proportion précise, à savoir de l'ordre de trois fois la quantité d'eau contenue dans les produits à traiter ;

. puis, mélange par broyage rapide à température ambiante ;

. enfin, séchage naturel sous légère ventilation.

Ce procédé de conservation de longue durée permet de manière simple, économique et rapide, de traiter n'importe quel produit d'origine biologique, pour aboutir à des produits secs, sans saveur salée ou sucrée accusée, et ce, sans faire appel à des techniques complexes ou à la chaleur ou au froid.

Avantageusement, en pratique :

– les produits biologiques frais sont traités de suite après avoir été prélevés ou récoltés (plantes) ;

– les plantes peuvent être éventuellement légèrement fanées ;

– le système dépresseur : dextrose et sel, peut contenir également du sorbitol, avantageusement à raison de 2,5 %, car le sorbitol freine les réactions de Maillard et aussi de l'ordre de 0,5 % d'acide citrique ;

– pour les produits facilement oxydables, le système dépresseur peut également contenir des traces de métabisulfite ou de tout autre anti-oxydant équivalent autorisé.

Comme déjà dit, dans le système dextrose/sel caractéristique de l'invention, la proportion pondérale entre le dextrose et le sel doit être comprise entre 7 et 7,5%, de préférence entre 7,2 et 7,3 %. On a observé que si cette proportion était inférieure à 7%, le produit fini avait une saveur à tendance trop salée. En revanche, si cette proportion excède 7,5 %, le produit fini présente une saveur à tendance trop sucrée.

La quantité de système dépresseur introduite doit être de l'ordre de trois (3) fois la quantité d'eau contenue à température ambiante dans les produits à traiter. Par "de l'ordre de trois fois", il faut entendre trois fois en poids, plus ou moins cinq pour cent (5 %), cette quantité pouvant effectivement varier dans ces limites, selon que le produit initial est plus ou moins humide, plus ou moins compact, et également en fonction de l'oxydabilité des produits biologiques de départ. En pratique, on a intérêt à être aussi près que possible de ce rapport de trois.

Par "broyage rapide", on désigne une action mécanique destinée à rompre les cellules, pour obtenir un mélange homogène, effectué à température ambiante et pendant une durée brève, c'est-à-dire de l'ordre seulement d'une minute. Ce broyage rapide caractéristique s'effectue notamment à température ambiante par cisaillement, par exemple à l'aide d'un broyeur à couteaux. Si on le désire, on peut également lors du broyage caractéristique, intégrer dans le mélange une petite quantité de matière grasse, tels qu'une huile neutre, du saindoux, de la margarine, du beurre, notamment pour favoriser la rétention des arômes.

On obtient de la sorte des granulés humides. Ces granulés humides sont alors séchés de manière naturelle sous une atmosphère légèrement ventilée, à une température comprise entre 25 et 30°C. Dans une forme de réalisation pratique, ces granulés sont répandus sur des plaques préalablement saupoudrées ou graissées pour éviter l'adhérence. On améliore également le séchage en remuant de temps en temps doucement les granulés.

Les produits secs obtenus contiennent sensiblement tous les éléments actifs des produits biologiques de départ, et ce sans aucune dégradation, tant sur le plan gustatif que sur celui des couleurs, des odeurs et des teneurs en principes actifs. En d'autres termes, le produit ainsi traité a conservé toutes les propriétés du produit initial, dans son intégralité et intégrité, à l'exception bien évidemment de l'eau que l'on a volontairement éliminée ou à tout le moins réduite. Les granulés secs obtenus peuvent être conditionnés, notamment dans des récipients étanches, de préférence opaques. Ils peuvent être également réduits en poudre ou être compactés en tablettes ou en comprimés. Ces produits sont stables et faciles à doser en principes actifs. Il sont également solubles, donc commodes à utiliser, par exemple en cuisine et en boissons. Enfin, ils peuvent être conservés longtemps sans altération sensible.

La saveur résultante du produit sec traité est facilement acceptable par le palais, surtout si lors de la consommation finale, le produit est dilué, par exemple dans un plat cuisiné ou dans une boisson. Du fait du fort pouvoir osmotique du sel et du sucre, il n'est pas indispensable de procéder à un broyage très poussé. En pratique, lorsque l'application finale envisagée est une application alimentaire ou diététique, on peut même se contenter d'un hachis classique. Comme déjà dit, le procédé selon l'invention est particulièrement avantageux pour la stabilisation et la conservation de plantes condimentaires ou aromatiques, puisque les huiles essentielles s'y trouvent dans leur intégrité et pour l'essentiel dans leur intégralité.

Dans une forme d'exécution avantageuse, le système dépresseur composite caractéristique de l'invention, comprend en poids :

– 85 % de dextrose,
– 12 % de chlorure de sodium,
– 2,5 % de sorbitol,
– 0,5 % d'acide citrique.

La manière dont l'invention peut être réalisée et les avantages qui en découlent, ressortiront mieux des exemples de réalisation qui suivent.

Exemple 1 :

Dans un broyeur à couteaux de dix litres en acier inoxydable, on introduit un système dépresseur contenant:

. 2 045 grammes de dextrose (85,2 %) ;
. 65 grammes de sorbitol (2,5 %) ;
. 290 grammes de chlorure de sodium (12,1 %) ;
. 12 grammes d'acide citrique.

Dans ce sytème dépresseur, le rapport pondéral entre les sucres et le sel, est de 7,3.

On fait tourner le broyeur pendant vingt secondes environ à 2000 tours/minute pour homogénéiser ce mélange.

A température ambiante, on ajoute ensuite dans ce système dépresseur 1000 grammes de persil frais contenant 80 % d'humidité (rapport pondéral voisin de 3,0).

On fait tourner pendant deux minutes à 2000 tours/minute.

On obtient alors 3 400 grammes d'une pâte verte granuleuse que l'on répand sur les plateaux et que l'on fait sécher à température voisine de 25°C dans une atmosphère légèrement ventilée.

On obtient alors 3 000 grammes de granulés secs de cette couleur verte caractéristique, prêts à l'emploi.

Exemple 2 :

On répète l'exemple précédent avec un système dépresseur, comprenant :
   . 4 340 grammes de dextrose (85,0 %) ;
   . 130 grammes de sorbitol (2,5 %) ;
   . 620 grammes de chlorure de sodium (12,15 %) ;
   . un gramme de métabisulfite.

Dans ce système dépresseur, le rapport pondéral entre les sucres et le sel est voisin de 7,21.

Après homogénéisation du mélange, on ajoute 2 000 grammes de myrtilles fraiches contenant 84 % d'humidité (rapport pondéral de 3,0).

En opérant comme à l'exemple 1, après séchage, on obtient une fine poudre rouge foncée de couleur caractéristique, facile à l'emploi.

Exemple 3 :

On répète l'exemple 1 avec de la betterave rouge à 85 % d'humidité.

Le système dépresseur comprend :
   . 52 400 grammes de dextrose (85 %) ;
   . 1 600 grammes de sorbitol (2,6 %) ;
   . 7 700 grammes de chlorure de sodium (12,4 %) ;
   . 300 grammes d'acide citrique.

Dans ce sytème dépresseur, on a donc un rapport sucres/sel égal à 7,0.

Après homogénéisation, on ajoute dans ce système 24 kilos de betteraves rouges à 85 % d'humidité (rapport pondéral : 3,04).

Après séchage à 30°C sous atmosphère légèrement ventilée, on obtient des granulés rouge clair.

Exemple 4 :

On répète l'exemple 2 avec 500 grammes de mélisse fraiche contenant 75 % d'humidité et avec 1130 grammes d'un système dépresseur contenant :
   – 355 grammes de dextrose ;

   – 29 grammes de saccharose ;
   – 136 grammes de chlorure de sodium ;
   – 10 grammes d'acide citrique.

On obtient donc un rapport pondéral sucres/sel de 7,2 et un rapport système dépresseur/eau contenue dans la mélisse voisin de 3,0.

Après séchage à 27°C sous atmosphère ventilée, on obtient une poudre vert clair prête à l'emploi.

## Revendications

1/ Procédé pour stabiliser et sécher les produits biologiques, par mélange avec un système dépresseur à base de sel et de sucre, <u>caractérisé</u> en ce qu'il consiste :
   – à traiter des produits biologiques frais ;
   – à mélanger à ces produits, de l'ordre de trois fois la quantité d'eau contenue dans ces produits, un système dépresseur comprenant un mélange de dextrose et de chlorure de sodium, dans lequel la proportion pondérale entre le dextrose et le sel, est comprise entre sept et sept et demie (7 et 7,5) ;
   – puis, à soumettre ce mélange, à température ambiante, à une action de broyage rapide, de manière à obtenir des granulés humides ;
   – et enfin, à sécher le produit obtenu sous légère ventilation à une température comprise entre 25 et 30°C.

2/ Procédé selon la revendication 1, caractérisé en ce que les produits biologiques sont traités de suite après avoir été prélevés ou récoltés (plantes).

3/ Procédé selon la revendication 2, caractérisé en ce que les produits biologiques sont des plantes légèrement fanées.

4/ Procédé selon la revendication 1, caractérisé en ce que le système dépresseur contient également 2,5 % de sorbitol.

5/ Procédé selon la revendication 4, caractérisé en ce que le système dépresseur contient également de l'ordre de 0,5 % d'acide citrique.

6/ Procédé selon l'une des revendications 1 à 5, caractérisé en ce que on introduit, dans le système dépresseur, des traces de métabisulfites.

7/ Procédé selon la revendication 1, caractérisé en ce que les produits biologiques sont des plantes condimentaires ou aromatiques, et en ce que le système dépresseur introduit à raison de trois fois la quantité d'eau contenue dans ces produits, contient en poids :
   – 85 % de dextrose,
   – 12 % de chlorure de sodium,
   – 2,5 % de sorbitol,
   – 0,5 % d'acide citrique.